(19) Europäisches Patentamt / European Patent Office / Office européen des brevets

(11) **EP 3 819 391 B1**

(12) **EUROPEAN PATENT SPECIFICATION**

(45) Date of publication and mention
of the grant of the patent:
**19.07.2023 Bulletin 2023/29**

(21) Application number: **20808272.7**

(22) Date of filing: **21.04.2020**

(51) International Patent Classification (IPC):
**B23P 6/00** *(2006.01)*     *C22C 1/08* *(2006.01)*
**H01M 4/66** *(2006.01)*     *H01M 4/80* *(2006.01)*

(52) Cooperative Patent Classification (CPC):
**B23P 6/00; C22C 1/08; H01M 4/661; H01M 4/808;**
**Y02E 60/10**

(86) International application number:
**PCT/JP2020/017136**

(87) International publication number:
**WO 2021/049088 (18.03.2021 Gazette 2021/11)**

(54) **POROUS METAL BODY AND METHOD FOR PRODUCING POROUS METAL BODY**

PORÖSER METALLKÖRPER UND VERFAHREN ZUR HERSTELLUNG EINES PORÖSEN
METALLKÖRPERS

CORPS MÉTALLIQUE POREUX ET PROCÉDÉ DE PRODUCTION D'UN CORPS MÉTALLIQUE
POREUX

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.09.2019 JP 2019166355**

(43) Date of publication of application:
**12.05.2021 Bulletin 2021/19**

(73) Proprietor: **Sumitomo Electric Toyama Co., Ltd.**
**Imizu-shi**
**Toyama 934-8522 (JP)**

(72) Inventors:
• **TSUCHIDA, Hitoshi**
  **Toyama 934-8522 (JP)**
• **NAKAGAWA, Toshitaka**
  **Toyama 934-8522 (JP)**

(74) Representative: **Boult Wade Tennant LLP**
**Salisbury Square House**
**8 Salisbury Square**
**London EC4Y 8AP (GB)**

(56) References cited:
WO-A1-01/06582          WO-A1-2019/017252
JP-A- 2006 179 424      JP-A- 2010 015 777
KR-A- 20060 027 260     US-A1- 2004 142 201

## Description

TECHNICAL FIELD

The present disclosure relates to a metal porous body and a method for manufacturing a metal porous body.

BACKGROUND ART

A metal porous body in a sheet shape having a skeleton with a three-dimensional network structure is utilized for various applications such as a filter that requires heat resistance, a battery electrode plate, a catalyst carrier, and a metal composite. For example, Celmet (manufactured by Sumitomo Electric Industries, Ltd., registered trademark), which is a metal porous body made of nickel, is widely adopted in various industrial fields, as an electrode of an alkaline storage battery such as a nickel hydrogen battery, a carrier for an industrial deodorizing catalyst, and the like. In addition, Aluminum-Celmet (manufactured by Sumitomo Electric Industries, Ltd., registered trademark), which is a metal porous body made of aluminum, can be used as a positive electrode of a lithium ion battery, because it is stable even in an organic electrolytic solution.

As a method for manufacturing a metal porous body, the metal porous body can be manufactured by performing conductive treatment on a surface of a skeleton of a resin porous body, then performing electroplating treatment to provide metal plating on the surface of the skeleton of the resin porous body, and then removing the resin porous body (see, for example, Japanese Patent Laying-Open No. 05-031446 (PTL 1) and Japanese Patent Laying-Open No. 2011-225950 (PTL 2)). WO0106582A1 relates to an alkaline storage battery pole plate and production method for alkaline storage battery pole plate and alkaline storage battery. US2004142201A1 relates to a metallic porous body. KR20060027260A relates to a test device of electrode collector and test method the same.

CITATION LIST

PATENT LITERATURE

PTL 1: Japanese Patent Laying-Open No. 05-031446
PTL 2: Japanese Patent Laying-Open No. 2011-225950

SUMMARY OF INVENTION

A metal porous body in accordance with one aspect of the present invention is according to claim 1.

A method for manufacturing a metal porous body in accordance with one aspect of the present invention is according to claim 3.

BRIEF DESCRIPTION OF DRAWINGS

Fig. 1 is a view schematically showing one example of a metal porous body in accordance with an embodiment of the present disclosure.

Fig. 2 is a cross sectional photograph of one example of the metal porous body in accordance with the embodiment of the present disclosure.

Fig. 3 is an enlarged view schematically showing a partial cross section of one example of the metal porous body in accordance with the embodiment of the present disclosure.

Fig. 4 is an enlarged view schematically showing a partial cross section along a line A-A, of one example (reference example) of a recess R in the metal porous body shown in Fig. 1.

Fig. 5 is an enlarged view schematically showing a partial cross section along line A-A, of another example (present invention) of recess R in the metal porous body shown in Fig. 1.

Fig. 6 is a schematic view showing cut portions for removing a predetermined region including a defective portion, of one example of the metal porous body in accordance with the embodiment of the present disclosure.

Fig. 7 is a schematic view showing a state where recesses R are formed at positions spaced from a position to which a foreign substance adheres, of one example of the metal porous body in accordance with a reference example.

Fig. 8 is a schematic view showing cut portions for removing defective portions in a conventional method for manufacturing a metal porous body in a long shape.

DETAILED DESCRIPTION

[Problem to be Solved by the Present Disclosure]

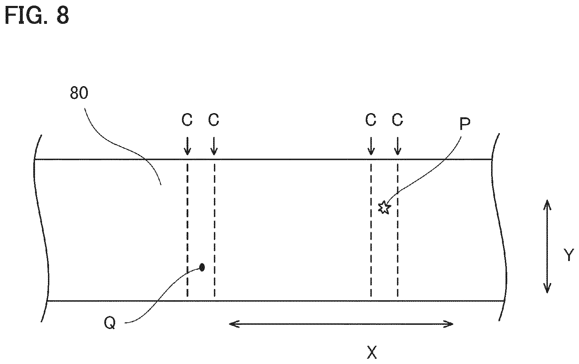

When a metal porous body is industrially mass-produced, the metal porous body is continuously manufactured using a long sheet-shaped resin molded body as a base material. When a metal porous body having a length in a longitudinal direction of several hundreds of meters is manufactured, it is very difficult to manufacture a metal porous body having no defective portion over the entire length thereof, and a defective portion may occur at a rate of several portions per 100 meters, due to various factors.
For example, when a flaw, chipping, or the like exists in a portion of a skeleton of the resin molded body used as a base material, it is not possible to form excellent metal plating at that portion. Thus, a skeleton of the metal porous body may also have a flaw, or a pinhole due to chipping of the skeleton. Since the skeleton at such a chipped portion has a weak strength, if the metal porous body in that state is used as a product, a crack may extend from that portion depending on the use conditions, and further, the metal porous body may be split in some cases.
In addition, an unintended foreign substance may adhere to the skeleton during manufacturing of the metal porous body. When the metal porous body is used for an electrode of a battery or the like, it is necessary to remove the foreign substance, because it is not possible to perform filling of an active material on the metal porous body having the foreign substance adhering thereto.
Conventionally, when a defective portion such as chipping of a skeleton or adhesion of a foreign substance as described above occurs in a metal porous body, the defective portion is removed by setting cut sites C on an upstream side and a downstream side in the vicinity of the defective portion (a chipped portion P or a foreign substance Q) and cutting a metal porous body 80 substantially parallel to a short direction Y, as shown in Fig. 8. Then, a metal porous body without including a defective portion is manufactured by connecting end portions of cut metal porous bodies.
However, when a defective portion is removed as described above, this results in a large manufacturing loss, because metal porous body 80 is cut over the entire width in short direction Y, although chipped portion P or foreign substance Q occupies only little area. In addition, when filling of an active material is performed to use metal porous body 80 from which the defective portion has been removed, as an electrode of a battery, for example, this may result in a manufacturing loss, because the structure of metal porous body 80 at a connected portion is different from that of the other portion.
When a defective portion such as a chipped portion of a skeleton or adhesion of a foreign substance is detected in a metal porous body, there may be adopted a method of removing (punching) the defective portion by opening a punch hole (a circular hole penetrating main surfaces of the metal porous body) in the metal porous body. In addition, there may also be adopted a method of removing the defective portion by forming a punch hole in the vicinity of the defective portion to mark the position of the defective portion on the metal porous body, and thereafter cutting the metal porous body as described above at appropriate timing, instead of punching the defective portion using a punch hole.
However, when a punch hole is opened in the metal porous body, a crack may extend from that portion, and further, the metal porous body may be split in some cases. Furthermore, the portion where the punch hole is opened in the metal porous body may have a burr, and there is a possibility that the burr may be caught on a workbench during conveyance of the metal porous body and thereby a foreign substance may fall off or may be scattered therearound.
Accordingly, an object of the present disclosure is to provide a metal porous body marked to allow removal of a predetermined region including a defective portion that has occurred during manufacturing of the metal porous body, and a method for manufacturing the same.

[Advantageous Effect of the Present Disclosure]

According to the present disclosure, it is possible to provide a metal porous body marked to allow removal of a predetermined region including a defective portion that has occurred during manufacturing of the metal porous body, and a method for manufacturing the same.

[Description of Embodiments]

First, aspects of the present invention will be described in list form.

(1) A metal porous body in accordance with one aspect of the present invention is according to claim 1.

According to the aspect of the disclosure according to (1) described above, it is possible to provide a metal porous body marked to allow removal of a predetermined region including a defective portion that has occurred during manufacturing of the metal porous body.

It should be noted that, in the metal porous body in accordance with an embodiment of the present disclosure, the defective portion is a portion where a portion of the skeleton of the metal porous body is chipped, or a portion where an unintended foreign substance adheres to the skeleton of the metal porous body.

(2) The metal porous body according to (1) described above further includes a small piece of another metal porous body having an average pore diameter different from that of the metal porous body in the long sheet shape, and the small piece of the metal porous body is overlapped on the defective portion at at least a bottom portion of the recess.

According to the aspect of the disclosure according to (2) described above, the metal porous body including the defective portion can have a higher tensile strength. In addition, when a foreign substance adheres to the defective portion, the foreign substance can be prevented from falling off or being scattered.

(3) Preferably, in the metal porous body according to (1) or (2) described above, a shape of an opening of the recess is a circular shape or an elliptical shape.

According to the aspect of the disclosure according to (3) described above, it is possible to provide a metal porous body in which a split or a fracture less likely occurs even if a recess is formed.

(4) A method for manufacturing a metal porous body in accordance with an embodiment of the present invention is according to claim 3.

According to the aspect of the disclosure according to (4) described above, it is possible to provide a method for manufacturing a metal porous body marked to allow removal of a predetermined region including a defective portion that has occurred during manufacturing of the metal porous body.

(5) In the method for manufacturing the metal porous body according to (4) described above, in forming the recess, the recess is formed by overlapping, on the defective portion, a small piece of another metal porous body having an average pore diameter different from that of the metal porous body in the long sheet shape.

According to the aspect of the disclosure according to (5) described above, it is possible to provide a method for manufacturing a metal porous body by which the metal porous body including a defective portion has a higher tensile strength. In addition, it is possible to provide a method for manufacturing a metal porous body by which, when a foreign substance adheres to a defective portion in the metal porous body, the foreign substance is prevented from falling off or being scattered.

(6) A metal porous body in accordance with a reference example is a metal porous body in a long sheet shape having a skeleton with a three-dimensional network structure, and includes a defective portion. A recess is formed at a position spaced from the defective portion to allow the defective portion to be identified. The defective portion is a portion where a portion of the skeleton is chipped or a portion where a foreign substance adheres to the skeleton.

According to the reference example according to (6) described above, it is possible to provide a metal porous body marked with a recess to allow removal of a predetermined region including a defective portion. In addition, since the recess has no burr, the metal porous body is not caught on a workbench when the predetermined region is cut, and work can be performed smoothly.

[Details of Aspects of the Present Disclosure]

Specific examples of the metal porous body and the method for manufacturing the metal porous body in accordance with the aspects of the present disclosure will be described in more detail below. It should be noted that the present invention is not limited to these examples, but is defined by the scope of the claims.

<Metal Porous Body>

Components of a metal porous body 10 in accordance with an embodiment of the present disclosure will be described in detail below, with reference to the drawings.

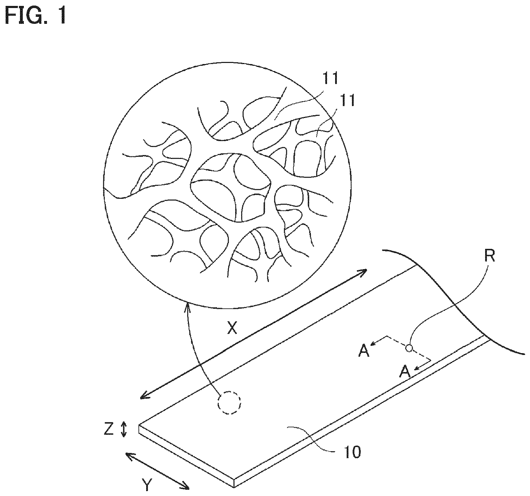

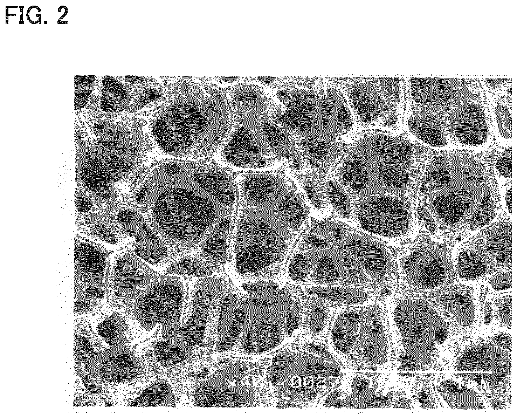

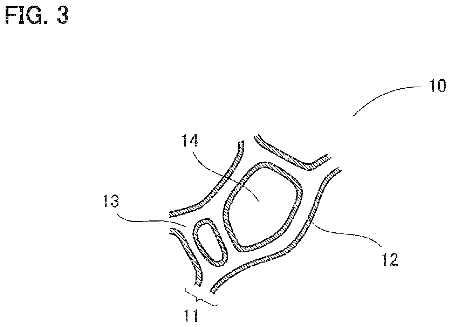

Fig. 1 schematically shows one example of metal porous body 10 in accordance with the embodiment of the present disclosure. Further, Fig. 2 shows an enlarged photograph showing a skeleton 11 with a three-dimensional network structure of metal porous body 10 shown in Fig. 1, and Fig. 3 shows an enlarged schematic view showing an enlarged cross section of metal porous body 10 shown in Fig. 2.

As shown in Fig. 1, metal porous body 10 has skeleton 11 with a three-dimensional network structure, and has a long sheet-shaped external appearance as a whole. A pore portion 14 formed by skeleton 11 with a three-dimensional network structure is a communication pore formed to continue from a surface to the inside of metal porous body 10.

As shown in Fig. 3, skeleton 11 of metal porous body 10 is typically constituted by a film 12 made of a metal or an alloy, and an inside 13 of skeleton 11 is hollow. In addition, pore portion 14 formed by skeleton 11 is a communication pore, as described above.

It is only necessary that skeleton 11 of metal porous body 10 is constituted by film 12 made of a metal or an alloy. Examples of the metal constituting skeleton 11 include nickel, aluminum, copper, and the like. In addition, examples of the alloy constituting skeleton 11 can include the metal described above alloyed with another metal added inevitably or intentionally.

The length in a longitudinal direction X of metal porous body 10 in a long sheet shape is not particularly limited, and may be about 60 m or more and 600 m or less, for example. In addition, the length in short direction Y of metal porous body 10 is also not particularly limited, and may be changed as appropriate according to the application of metal porous body 10. It should be noted that short direction Y of metal porous body 10 is a direction orthogonal to longitudinal direction X and a thickness direction Z of metal porous body 10 (see Fig. 1).

The thickness of metal porous body 10 may be selected as appropriate according to the application of metal porous body 10. The thickness of metal porous body 10 can be measured with a digital thickness gauge, for example. In many cases, by setting the thickness to 0.1 mm or more and 3.0 mm or less, a lightweight and highly strong metal porous body can be obtained. From these viewpoints, the thickness of metal porous body 10 is more preferably 0.2 mm or more and 2.5 mm or less, and further preferably 0.3 mm or more and 2.0 mm or less.

The average pore diameter of metal porous body 10 may be selected as appropriate according to the application of metal porous body 10. It should be noted that the average pore diameter of metal porous body 10 refers to a value obtained by observing the surface of metal porous body 10 in at least 10 fields of view with a microscope or the like, to determine an average number (nc) of cells (pore portions 14) per inch (25.4 mm = 25400 $\mu$m), and performing calculation by the following equation.

$$\text{Average pore diameter } (\mu m) = 25400 \ \mu m/nc$$

It should be noted that measurement of the number of cells shall be performed according to the method for determining the number of cells of soft foam materials defined in JIS K6400-1:2004 Appendix 1 (reference).

When metal porous body 10 is used as a current collector of a battery, for example, the average pore diameter of metal porous body 10 may be set in a range where a fill amount and a utilized amount of an active material that fills pore portions 14 are suitable. In addition, when metal porous body 10 is used as a filter, the average pore diameter is selected according to the size of particles to be captured.

It should be noted that, in many cases, by setting the average pore diameter to 100 $\mu$m or more and 2000 $\mu$m or less, a lightweight and highly strong metal porous body can be obtained. From these viewpoints, the average pore diameter of metal porous body 10 is more preferably set to 200 $\mu$m or more and 1300 $\mu$m or less, and is further preferably set to 250 $\mu$m or more and 900 $\mu$m or less.

The porosity of metal porous body 10 may be selected as appropriate according to the application of metal porous body 10. The porosity of metal porous body 10 is defined by the following equation.

$$\text{Porosity } (\%) = [1 - \{Mp/(Vp \times dp)\}] \times 100$$

Mp: mass of the metal porous body [g]
Vp: volume of the shape of an external appearance in the metal porous body [cm$^3$]
dp: density of the metal constituting the metal porous body [g/cm$^3$]

When metal porous body 10 is used as a current collector of a battery, for example, the porosity of metal porous body 10 may be set in a range where the fill amount and the utilized amount of the active material that fills pore portions 14 are suitable.

In addition, in many cases, by setting the porosity to about 90% or more and 98% or less, a lightweight and highly strong metal porous body can be obtained. In addition, depending on the application of the metal porous body, it is also possible to compress a metal porous body having a porosity of about 90% or more and 98% or less to have a thickness of about one-tenth, to obtain a metal porous body having a porosity of 50% or more.

In metal porous body 10 in accordance with the embodiment of the present disclosure, a recess R is formed at a defective portion that has occurred during manufacturing, as shown in Fig. 1. Generally, as the metal porous body in a long sheet shape having a skeleton with a three-dimensional network structure has a larger size, defective portions are more likely to exist due to various reasons. For example, when a portion of a skeleton of a resin molded sheet (such as a urethane sheet, for example) used as a base material during manufacturing of the metal porous body is chipped, metal plating is not formed at that portion, and thus metal porous body 10 may also have a pinhole at which a portion of the skeleton is chipped. Further, an unintended foreign substance may adhere to a portion of a surface of the skeleton of metal porous body 10. In metal porous body 10 in accordance with the embodiment of the present disclosure, recess R is formed at a position where the defective portion such as chipping of the skeleton or adhesion of a foreign substance as described above has occurred.

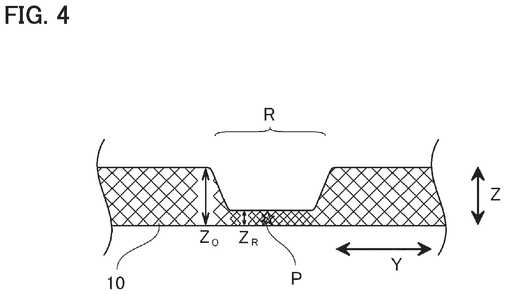

Fig. 4 shows a schematic enlarged view of a partial cross section along a line A-A, of one example (reference example) of recess R in metal porous body 10 shown in Fig. 1.

As shown in Fig. 4, recess R is formed to crush chipped portion P that has occurred during manufacturing of metal porous body 10. In many cases, chipped portion P is formed when a split, a crack, or chipping occurs in a portion of skeleton 11 of metal porous body 10. Thus, when the metal porous body is used as a product without taking any measures against chipped portion P, and a stress is applied to the metal porous body on that occasion, the split or the crack may extend and the metal porous body may be fractured in some cases. In contrast, in metal porous body 10 in accordance with the reference example, since recess R is formed at chipped portion P that is a defective portion, skeleton 11 in the vicinity of chipped portion P is compressed and has a higher metal density, and has a strength higher than that of the other portion. Thereby, the defective portion is reinforced and metal porous body 10 in the vicinity thereof has a higher tensile strength, which can prevent extension of a crack or a split in skeleton 11 even if a stress is applied to the vicinity of the defective portion.

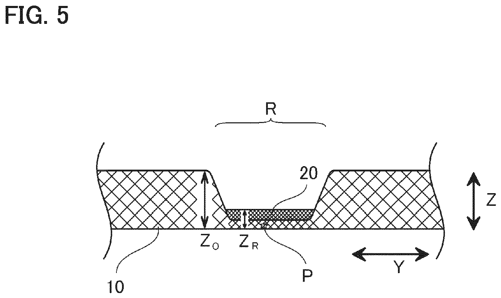

Fig. 5 shows a schematic enlarged view of a partial cross section along line A-A, of another example (present invention) of recess R in metal porous body 10 shown in Fig. 1.

Recess R shown in Fig. 5 is formed by overlapping a small piece of a metal porous body 20 having an average pore diameter different from that of metal porous body 10. Since a bottom portion of recess R is constituted by metal porous body 10 and metal porous body 20, the tensile strength in the vicinity of the defective portion in the metal porous body can be further increased. In addition, there may be a case where foreign substance Q (not shown in Fig. 5) adheres to the defective portion, and in such a case, foreign substance Q can be sandwiched between the both metal porous bodies (10, 20) and can be prevented from falling off or being scattered. As described above, conventionally, a punch hole is formed at a defective portion having a foreign substance adhering thereto, or in the vicinity of the defective portion, to remove or mark the defective portion. However, when a punch hole is opened in the metal porous body, a crack is likely to occur at the portion where the punch hole is formed, and further, the metal porous body may be split in some cases. Furthermore, the portion where the punch hole is formed in the metal porous body may have a burr, and there is a possibility that the burr may be caught on a workbench during conveyance of the metal porous body and thereby a foreign substance may fall off or may be scattered therearound. In contrast, in the metal porous body having recess R shown in Fig. 5, since skeleton 11 is compressed and deformed during formation of recess R, pore portions 14 are crushed and metal density is increased at the bottom portion of recess R, and the foreign substance is sandwiched and confined between compressed metal porous body 10 and metal porous body 20.

In addition, since the average pore diameter of metal porous body 20 is different from the average pore diameter of metal porous body 10, it is possible to make metal porous body 20 less likely to be delaminated from metal porous body 10. This is because, when metal porous body 10 and metal porous body 20 have different average pore diameters, skeletons 11 of these metal porous bodies are crushed in a fully entangled manner at a contact portion between metal porous body 10 and metal porous body 20 during formation of recess R.

For example, when the average pore diameter of metal porous body 10 is about 200 $\mu$m or more and 1300 $\mu$m or less, the average pore diameter of metal porous body 20 is preferably about 250 $\mu$m or more and 900 $\mu$m or less.

Although the shape of recess R is not particularly limited, it is preferable that the shape of an opening of recess R is a circular shape or an elliptical shape when metal porous body 10 is viewed from thickness direction Z. Since the shape of the opening of recess R is a circular shape or an elliptical shape, it is possible to suppress stress concentration on recess R and resultant occurrence of a crack or a fracture when a force is exerted on metal porous body 10 during conveyance or the like.

Although the size of the opening of recess R is not particularly limited, it is preferable, from the viewpoint of suppressing occurrence of a crack or a fracture due to chipped portion P and falling-off of foreign substance Q, that recess R is formed such that the entire defective portion is located within the bottom portion of recess R.

The depth of recess R is not particularly limited, and it is only necessary that a thickness $Z_R$ of recess R in metal porous body 10 is thinner than a thickness Zo of metal porous body 10. For example, thickness $Z_R$ of metal porous body 10 at recess R is preferably about 10% or more and 75% or less of thickness Zo of metal porous body 10 in the other portion. Thereby, metal porous body 10 around the defective portion can have a higher strength. Thickness $Z_R$ is more preferably 15% or more and 50% or less of thickness Zo, and further preferably 20% or more and 35% or less of thickness Zo.

In addition, in the cross sectional shape of recess R, a wall portion is preferably formed to be gradually widened from the bottom portion toward the opening as shown in Figs. 4 and 5, rather than standing vertically. Further, an end portion of the opening (in the vicinity of a boundary between the main surface of metal porous body 10 and the wall portion) preferably has a curved cross sectional shape. This can reduce a possibility that, when metal porous body 10 is used as an electrode of a battery, for example, metal porous body 10 may have a fracture starting from recess R in the step of filling pore portions 14 of metal porous body 10 with the active material.

In metal porous body 10 in accordance with the embodiment of the present disclosure, since the defective portion is reinforced by recess R as described above, metal porous body 10 is free of worries about the occurrence of a crack during conveyance or the like. Thus, when metal porous body 10 is used as an electrode of a battery, for example, filling of the active material can be performed without removing recess R beforehand. In addition, when a foreign substance adheres to the defective portion, the foreign substance can be prevented from falling off or being scattered even during filling of the active material, because recess R is formed with metal porous body 20 being overlapped as shown in Fig. 5.

When filling of the active material is performed on metal porous body 10 with recess R not being removed therefrom, the fill amount of the active material at the bottom portion of recess R is different from that in the other portion of the metal porous body, because skeleton 11 is crushed and pore portions 14 become smaller at the bottom portion of recess R. Thus, recess R can be easily detected even after filling of the active material. The metal porous body filled with the active material is cut according to the size of an electrode to be fabricated.

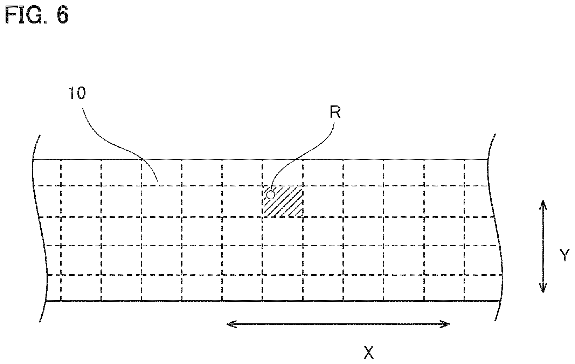

Fig. 6 shows an example of cutting metal porous body 10. In Fig. 6, broken lines indicate cut sites. A product without including a defective portion is fabricated by cutting metal porous body 10 and then removing a cut piece including recess R. It should be noted that, when the cut sites of metal porous body 10 are determined before filling of the active material, filling of the active material may be performed after cutting and removing only the portion including recess R beforehand.

Accordingly, since it is only necessary to remove the cut piece including recess R in metal porous body 10 in accordance with the embodiment of the present disclosure, manufacturing loss of a target can be reduced, when compared with a conventional metal porous body that is cut over the entire width in short direction Y.

When a metal porous body in a long sheet shape is manufactured, a foreign substance may adhere thereto as described above, although with low frequency. For the portion having such a foreign substance adhering thereto, it is necessary to remove a predetermined region including the foreign substance, or to attach other metal porous body 20 to prevent falling-off of the foreign substance. In any of these cases, it is preferable to mark the portion having the foreign substance adhering thereto such that it can be treated.

In a reference example it is also possible to mark the metal porous body such that a defective portion is perceived, by forming recess R at a position spaced from the defective portion. Although the position where recess R is formed and the number of recesses R are not particularly limited, preferable examples include a case where recesses R are provided at two positions linearly equally spaced from a position where chipped portion P is formed as a defective portion. In this case, the position of chipped portion P is easily perceived. That is, in this case, chipped portion P exists at the center on a line connecting two recesses R.

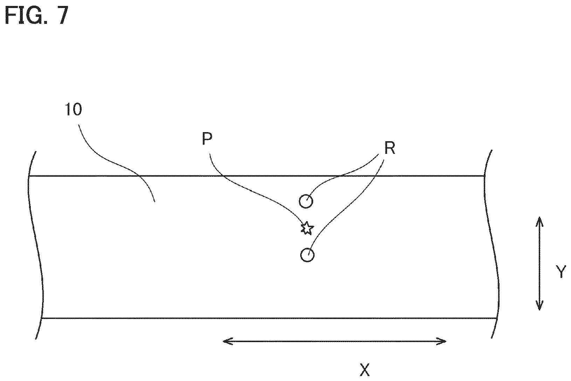

Fig. 7 shows a reference example where chipped portion P that has occurred in the skeleton of metal porous body 10 is marked with recesses R formed at positions spaced from the chipped portion. In metal porous body 10, recesses R are formed at positions spaced from chipped portion P in short direction Y. Although recesses R are formed at the positions spaced from chipped portion P in short direction Y in the example shown in Fig. 7, recesses R may be formed at positions spaced from chipped portion P in longitudinal direction X. The number of recesses R may be one, or may be two or more. In the example shown in Fig. 7, two recesses R are formed on both sides (an upstream side and a downstream side) in short direction Y, with chipped portion P serving as the center, to sandwich chipped portion P therebetween. Thereby, existence of chipped portion P at a substantially central portion on a line connecting two recesses R is easily perceived, and attention is easily paid during working.

No burr is formed in recess R. Thus, in the step of cutting and removing the predetermined region including chipped portion P, for example, metal porous body 10 is not caught on a workbench and work can be performed smoothly, and work can be performed without causing a crack in the metal porous body. It should be noted that a burr refers to a region where the skeleton of metal porous body 10 protrudes from the main surface of metal porous body 10 when metal porous body 10 is observed from a direction orthogonal to thickness direction Z of the metal porous body.

The shape of recess R formed at a position spaced from the defective portion in the metal porous body is not particularly limited, and may be any shape identical to that of recess R formed at the defective portion described above, such as a circular shape or an elliptical shape, for example.

<Method for Manufacturing Metal Porous Body>

A method for manufacturing the metal porous body in accordance with the embodiment of the present disclosure will be described below.

The method for manufacturing the metal porous body in accordance with the embodiment of the present disclosure has the step of forming recess R at a defective portion in metal porous body 10 in a long sheet shape having a skeleton with a three-dimensional network structure. In a reference example, the method for forming recess R is not particularly limited, and may be any method capable of compressing a defective portion found in metal porous body 10 to locate the defective portion at the bottom portion of recess R. Examples of such a method include the method for forming recess R by pressing a bar-like jig having a substantially flat end portion against the defective portion so as to form a flat surface. When the defective portion is relatively large and extends out of the area of the end portion of the bar-like jig, it is preferable to continuously form a plurality of recesses R and cause the entire defective portion to be located within the bottom portions of recesses R.

In the step of forming recess R described above, in the present invention it is required to form recess R by overlapping, on the defective portion, a small piece of metal porous body 20 having an average pore diameter different from that of metal porous body 10 in the long sheet shape. Thereby, metal porous body 10 in which the bottom portion of recess R is constituted by metal porous body 10 and metal porous body 20 as shown in Fig. 5 can be manufactured.

Although the size of metal porous body 20 is not particularly limited, metal porous body 20 preferably has a size that can cover the entire defective portion. In addition, the thickness of metal porous body 20 is not particularly limited, and metal porous body 20 having a thickness comparable to that of metal porous body 10 can be used.

Further, in a reference example, recess R may be formed at a position spaced from the defective portion in metal porous body 10. In this case, it is preferable to form recesses R at two positions linearly equally spaced from the defective portion serving as a substantial center therebetween. The direction of a straight line may be short direction Y, or may be longitudinal direction X.

[Examples]

In the following, the present disclosure will be described in more detail based on Examples. However, these Examples are given by way of illustration, and the package body and the method for manufacturing the same in the present disclosure are not limited thereto. The scope of the present disclosure is defined by the scope of the claims, and includes any modifications within the scope and meaning equivalent to the scope of the claims.

[Example 1]

As metal porous body 10, Celmet No. 1 manufactured by Sumitomo Electric Industries, Ltd. (made of nickel, and having a porosity of 98%, an average pore diameter of 600 $\mu$m, a thickness of 1.0 mm, a length in the longitudinal direction of 100 m, and a length in the short direction of 200 mm) was prepared ("Celmet" is a registered trademark of Sumitomo Electric Industries, Ltd.). In Celmet No. 1, chipped portion P having a pinhole formed due to chipping of a portion of skeleton 11 was not detected, whereas three defective portions formed due to adhesion of foreign substances Q to skeleton 11 were detected.

At each of the three defective portions having foreign substances Q adhering thereto, recess R was formed as follows.

First, as metal porous body 20, a small piece of Celmet cut out to have a diameter of about 10 mm and a thickness of 1.0 mm (manufactured by Sumitomo Electric Industries, Ltd., made of nickel, and having a porosity of 98% and an average pore diameter of 500 $\mu$m) was prepared. Then, the small piece of Celmet was overlapped on each defective portion having foreign substance Q adhering thereto, a bar-like jig was pressed against the small piece so as to form a flat surface, and thereby recess R having a circular shape as shown in Fig. 5 was formed. The shape of recess R had a depth ($Z_O$-$Z_R$, see Fig. 5) of 0.7 mm, and a diameter of the opening of about 10 mm. Further, as shown in Fig. 5, the wall portion of recess R was formed to be gradually widened from the bottom portion toward the opening.

[Example 2] - Reference Example

As metal porous body 10, Celmet No. 2, which was the same as that in Example 1, was prepared. In Celmet No. 2, three chipped portions P having pinholes formed due to chipping of portions of skeleton 11 were detected, whereas a defective portion formed due to adhesion of foreign substance Q was not detected.

The bar-like jig was pressed against each of the three defective portions (chipped portions P) having pinholes formed therein, so as to form a flat surface, and thereby recess R having a circular shape was formed. The shape of recess R had a depth ($Z_O$-$Z_R$, see Fig. 4) of 0.7 mm, and a diameter of the opening of about 10 mm. Further, as shown in Fig. 4, the wall portion of recess R was formed to be gradually widened from the bottom portion toward the opening.

[Example 3]

As metal porous body 10, Celmet No. 3, which was the same as that in Example 1, was prepared. In Celmet No. 3, two chipped portions P having pinholes formed due to chipping of portions of skeleton 11 were detected, whereas a defective portion formed due to adhesion of foreign substance Q was not detected.

Recess R was formed at each of the two defective portions (chipped portions P) having pinholes formed therein, using metal porous body 20 as in Example 1.

[Example 4] - Reference Example

As metal porous body 10, Celmet No. 4, which was the same as that in Example 1, was prepared. In Celmet No. 4, three chipped portions P having pinholes formed due to chipping of portions of skeleton 11 were detected, whereas a defective portion formed due to adhesion of foreign substance Q was not detected.
For each of the three defective portions having pinholes formed therein, recesses R were formed at positions spaced from each defective portion (chipped portion P) serving as a substantial center, on both sides in short direction Y, as shown in Fig. 7. Recesses R were formed as in Example 2.

[Comparative Example 1]

As metal porous body 10, Celmet No. 5, which was the same as that in Example 1, was prepared. In Celmet No. 5, three defective portions formed due to adhesion of foreign substances Q were detected as defective portions. At each of these defective portions (positions to which foreign substances Q adhered), a punch hole having an opening with a diameter of about 10 mm was opened to remove the defective portion having foreign substance Q adhering thereto.

[Comparative Example 2]

As metal porous body 10, Celmet No. 6, which was the same as that in Example 1, was prepared. In Celmet No. 6, three chipped portions P having pinholes formed therein were detected as defective portions. At each of these defective portions (chipped portions P), a punch hole having an opening with a diameter of about 10 mm was opened to remove the defective portion.

[Comparative Example 3]

As metal porous body 10, Celmet No. 7, which was the same as that in Example 1, was prepared. In Celmet No. 7, two chipped portions P having pinholes formed therein were detected as defective portions. For each of these defective portions (chipped portions P), punch holes with a diameter of about 10 mm were formed at positions spaced from each defective portion serving as a substantial center, on both sides in short direction Y.

- Evaluation -

(Conveyance)

Celmet No. 1 to Celmet No. 7 fabricated in Examples 1 to 4 and Comparative Examples 1 to 3 were each supplied from a roll, conveyed in a horizontal direction, and wound on another roll. As a result of checking each Celmet during conveyance, no change was observed in each recess R in Celmet No. 1 to Celmet No. 4, whereas extension of cracks was confirmed in some punch holes in Celmet No. 5 to Celmet No. 7. This is considered to be because the tension applied to the metal porous body during conveyance caused cracks in punch hole portions having a weak skeleton.

(Filling of Active Material)

Pore portions of Celmet No. 1 to Celmet No. 7 fabricated in Examples 1 to 4 and Comparative Examples 1 to 3 were filled with an active material for an electrode (positive electrode) of a power storage device (lithium ion secondary battery). As the active material, a slurry prepared by adding a mixture including $LiCoO_2$ powder, acetylene black (a conductive assistant), and PVDF (a binder) mixed with a mass ratio of 88:6:6 to NMP was used. Filling of the active material was performed by immersing each Celmet in this slurry. After being filled with the active material, each Celmet was fed into a drying oven to remove NMP, and was dried.
As a result of checking each Celmet after it was filled with the active material, it was possible to immediately find the position of recess R or a punch hole in all of these Celmets. Then, as a result of checking the state of each recess R and punch hole, no change was observed in each recess R formed at a defective portion or in the vicinity thereof in Celmet No. 1 to Celmet No. 4, whereas extension of cracks was confirmed in the punch holes in Celmet No. 5 to Celmet No. 7. In addition, as a result of checking each recess R formed at the portion having foreign substance Q adhering thereto in Celmet No. 1, falling-off of foreign substance Q was not confirmed. As a result of checking the vicinity of the substantial center on a straight line connecting two punch holes formed in Celmet No. 7, extension of a crack was confirmed in chipped portion P.

(Removal of Defective Portion)

The portion where recess R was formed in each of Celmet No. 1 to Celmet No. 7 was placed on a workbench, and a predetermined region including the portion having the defective portion was cut and removed. On this occasion, since the recesses in Celmet No. 1 to Celmet No. 4 had no burr, each Celmet was not caught on the workbench, and it was possible to smoothly perform the work of cutting and removing the predetermined region described above. In addition, during working, chipped portion P had no change, and it was also possible to prevent foreign substance Q from falling off or being scattered therearound.

In contrast, since a burr was formed at the portion where the punch hole was formed in each of Celmet No. 5 to Celmet No. 7, the burr was caught on the workbench during working, deteriorating workability. In addition, extension of a crack due to vibration was confirmed in each punch hole and chipped portion P.

REFERENCE SIGNS LIST

10: metal porous body; 11: skeleton; 12: film made of a metal or an alloy; 13: inside of the skeleton; 14: pore portion; 20: small piece of a metal porous body; 80: metal porous body; P: chipped portion; Q: foreign substance; R: recess; X: longitudinal direction of the metal porous body; Y: short direction of the metal porous body; Z: thickness direction of the metal porous body.

**Claims**

1.  A metal porous body (10) in a long sheet shape having a skeleton (11) with a three-dimensional network structure, the metal porous body (10) comprising:

    a defective portion,
    a recess (R) being formed at the defective portion,
    the defective portion being a portion where a portion of the skeleton (11) is chipped or a portion where a foreign substance (Q) adheres to the skeleton (11), **characterized in that**
    the metal porous body (10) further comprises a small piece of another metal porous body (20) having an average pore diameter different from that of the metal porous body (10) in the long sheet shape, wherein the small piece of the metal porous body (20) is overlapped on the defective portion at at least a bottom portion of the recess (R).

2.  The metal porous body (10) according to claim 1, wherein a shape of an opening of the recess (R) is a circular shape or an elliptical shape.

3.  A method for manufacturing a metal porous body (10), comprising:

    preparing a metal porous body (10) in a long sheet shape having a skeleton (11) with a three-dimensional network structure; and
    forming a recess (R) at a defective portion in the metal porous body (10) in the long sheet shape,
    the defective portion being a portion where a portion of the skeleton (11) is chipped or a portion where a foreign substance (Q) adheres to the skeleton (11), **characterized in that** forming the recess (R) forms the recess (R) by overlapping, on the defective portion, a small piece of another metal porous body (20) having an average pore diameter different from that of the metal porous body (10) in the long sheet shape.

**Patentansprüche**

1.  Poröser Metallkörper (10) in Form einer langen Platte mit einem Skelett (11) mit einer dreidimensionalen Netzwerkstruktur, wobei der poröse Metallkörper (10) umfasst:

    einen defekten Abschnitt,
    eine an dem defekten Abschnitt gebildete Ausnehmung (R),
    wobei der defekte Abschnitt ein Abschnitt ist, an dem ein Teil des Skeletts (11) abgeplatzt ist oder ein Abschnitt, an dem eine Fremdsubstanz (Q) an dem Skelett (11) haftet,
    **dadurch gekennzeichnet, dass**
    der poröse Metallkörper ferner ein kleines Stück eines anderen porösen Metallkörpers (20) mit einem durchschnittlichen Porendurchmesser umfasst, der sich von dem des porösen Metallkörpers (10) in Form der langen Platte unterscheidet,

wobei das kleine Stück des porösen Metallkörpers (20) auf dem defekten Abschnitt an mindestens einem Bodenabschnitt der Ausnehmung (R) überlappt.

2. Poröser Metallkörper (10) nach Anspruch 1, wobei eine Form einer Öffnung der Ausnehmung (R) eine kreisförmige oder elliptische Form aufweist.

3. Verfahren zur Herstellung eines porösen Metallkörpers (10), umfassend:

Herstellen eines porösen Metallkörpers (10) in Form einer langen Platte mit einem Skelett (11) mit einer dreidimensionalen Netzwerkstruktur; und

Ausbilden einer Ausnehmung (R) an einem defekten Abschnitt des porösen Metallkörpers (10) in Form einer langen Platte,

wobei der defekte Abschnitt ein Abschnitt ist, an dem ein Teil des Skeletts (11) abgeplatzt ist, oder ein Abschnitt, an dem eine Fremdsubstanz (Q) an dem Skelett (11) haftet,

**dadurch gekennzeichnet, dass**

das Ausbilden der Ausnehmung (R) die Ausnehmung (R) ausbildet, indem ein kleines Stück eines anderen porösen Metallkörpers (20) mit einem durchschnittlichen Porendurchmesser, der sich von dem des poröse Metallkörper (10) in Form der langen Platte unterscheidet, auf dem defekten Abschnitt überlappt wird.


**Revendications**

1. Corps poreux en métal (10) dans une forme de feuille longue ayant un squelette (11) avec une structure de réseau tridimensionnel, le corps poreux en métal (10) comprenant :

une portion défectueuse,

un creux (R) étant formé sur la portion défectueuse,

la portion défectueuse étant une portion où une portion du squelette (11) est ébréchée ou une portion où une substance étrangère (Q) adhère au squelette (11),

**caractérisé en ce que**

le corps poreux en métal (10) comprend de plus une petite pièce d'un autre corps poreux en métal (20) ayant un diamètre moyen de pore différent de celui du corps poreux en métal (10) dans la forme de feuille longue,

dans lequel la petite pièce du corps poreux en métal (20) chevauche la portion défectueuse sur au moins une portion de fond du creux (R).

2. Corps poreux en métal (10) selon la revendication 1, dans lequel une forme d'une ouverture du creux (R) est une forme circulaire ou une forme elliptique.

3. Procédé pour la fabrication d'un corps poreux en métal (10), comprenant :

la préparation d'un corps poreux en métal (10) dans une forme de feuille longue ayant un squelette (11) avec une structure de réseau tridimensionnel ; et

la formation d'un creux (R) sur une portion défectueuse dans le corps poreux en métal (10) dans la forme de feuille longue,

la portion défectueuse étant une portion où une portion du squelette (11) est ébréchée ou une portion où une substance étrangère (Q) adhère au squelette (11),

**caractérisé en ce que**

la formation du creux (R) forme le creux (R) par chevauchement, sur la portion défectueuse, d'une petite pièce d'un autre corps poreux en métal (20) ayant un diamètre moyen de pore différent de celui du corps poreux en métal (10) dans la forme de feuille longue.

FIG. 1

FIG. 2

FIG. 3

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5031446 A
- JP 2011225950 A
- WO 0106582 A1
- US 2004142201 A1
- KR 20060027260 A